# EUROPEAN PATENT APPLICATION

(11) **EP 4 645 058 A1**
(43) Date of publication of application: **05.11.2025**
(21) Application number: 24173422.7
(22) Date of filing: 30.04.2024
(51) Int. Cl.: G06F 3/12

(54) **A PRINTER CONFIGURED TO OUTPUT STACKS ON PALLETS AND A METHOD THEREFOR**

(71) Applicant: Canon Production Printing Holding B.V., 5914 HH Venlo (NL)
(72) Inventor: KERSEMAKERS, Robbie, Venlo (NL); GERRITS, Antonius M., Venlo (NL); DE JONG, Frederik, Venlo (NL)
(74) Representative: Canon Production Printing IP Department

(57) **Abstract**

A printer configured to output stacks of printed print media on pallets comprises a print controller comprising a print job queue and/or a print job waiting room comprising print jobs. The print controller is configured to create and maintain a pallet stack object which represent a pallet with a stacked output. The stacked output is printed sheets related to at least one print job from the print job queue and/or a print job waiting room. The pallet stack object is displayed on dedicated user interface windows at a user interface connected to the printer. The user is allowed to compose and maintain by means of the user interface of the printer the stacked output for each pallet stack object created by the print controller.

## Description

### BACKGROUND OF THE INVENTION

### 1. Field of the invention

The present invention relates to a printer configured to output stacks of printed print media on pallets, the printer comprising a print controller comprising a print job queue and/or a print job waiting room comprising print jobs,. The printed print media on the pallets may be for example sheets of paper.

### 2. Description of Background Art

Currently printing systems typically present print jobs in print job queues, but are not visualizing the exact output composition or allowing to think in the exact output composition on mixed jobs that are printed with stacks on larger pallets as their physical appearance.

Until now a print job order was used as only a concept and there was no visualization of output stacks of the printed print media on the pallets. A job order of print jobs to be printed on cut sheets was mainly determined by a submission moment of the print job to the printer.

### SUMMARY OF THE INVENTION

It is an object of the invention to provide a printer which supports the operator in optimizing the composition of the output stacks.

In accordance with the present invention, the printer is characterized in that the print controller is configured to create and maintain a pallet stack object which represent a pallet with a stacked output, the stacked output being printed sheets related to at least one print job from the print job queue and/or a print job waiting room, to display the pallet stack object on dedicated user interface windows at a user interface connected to the printer and to allow a user by means of the user interface of the printer to compose and maintain the stacked output for each pallet stack object created by the print controller.

By doing so, an unload moment of the pallet becomes visible as being scheduled as output, which makes it possible to optimally pick up the printer output. Therefore a better connection between the physical characteristics such as the pallet and the stack, and the dedicated user interface windows is established. The present invention leads to an overall improved productivity of the printer and also to an improved productivity of the devices which are used for post-processing the printed output. Thereby, the object of the present invention has been achieved.

The dedicated user interface windows may be displayed on the remote user interface e.g. if the planning role for stacks executed by an operator or user or planner of the printer is at a larger distance from the printer.

More specific optional features of the invention are indicated in the dependent claims.

According to an embodiment the print controller is configured to maintain a queue of pallet stack objects in a chronological sequence order of processing the corresponding stacked output of the pallet stack objects in the queue of pallet stack objects.

According to an embodiment the print controller is configured to optimize a composition of the pallet of the stacked output with respect to a post-processing step and/or a media property defined in the at least one print job corresponding to the stacked output. The print controller may optimize the composition completely automatically by means of decision rules regarding the creation of pallets of stacked output. The print controller may create a proposal for the user of the printer via the user interface windows how to compose the pallets of stacked output. On the other hand the user himself may compose the pallet of stacked output by means of the user interface windows. For example, from the media properties a media size may be extracted to allow a composition of a pallet stack object which comprises print jobs to be printed on at least one media type of the same media size. This is advantageous since a productivity of the printing and post-processing will increase in case the post-processing device has a dedicated set up time, e.g. the post-processing device has to be set up again for each different size or type of media.

According to an embodiment the print controller is configured to optimize a composition of the pallet of the stacked output with respect to characteristics or dimensions of an output stack to be created. Such an optimization may for example take a maximum stack height into account which can be processed by the printer and by any corresponding post-processing device intended to be used after printing.

According to an embodiment one of the dedicated user interface windows comprises a visualization of the queue of pallet stack objects.

According to an embodiment the print controller is configured to schedule for each pallet stack object a scheduled time for unloading the corresponding stacked output from the printer.

The present invention also relates to a method for a printer configured to output stacks of printed print media on pallets, the printer comprising a print controller comprising a print queue and/or a print job waiting room, characterized in that the method comprises the steps of
- creating and maintaining a pallet stack object which represent a pallet with a stacked output, the stacked output being printed sheets related to at least one print job from the print queue and/or the print job waiting room,
- displaying the pallet stack object on dedicated user interface windows at a user interface connected to the printer,
- allowing a user by means of the user interface of the printer to compose and maintain the stacked output for each pallet stack object created by the print controller,
- scheduling the pallet stack object in a pallet stack object queue for printing the corresponding at least one print job by the printer, and
- printing the corresponding at least one print job of the pallet stack object.

The present invention also relates to a computer program product, including computer readable code embodied on a computer readable medium, said computer readable code comprising instructions for executing the steps of the method according to the present invention by means of a printer according to the present invention.

The present invention additionally relates to a computer-readable medium having stored thereon the above mentioned computer program product.

Further scope of applicability of the present invention will become apparent from the detailed description given hereinafter. However, it should be understood that the detailed description and specific examples, while indicating preferred embodiments of the present invention, are given by way of illustration only, since various changes and modifications within the spirit and scope of the present invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
- Fig. 1: is a schematic cross-sectional, side view of a representation of a printer according to the present invention;
- Fig. 2: is a schematic top view of a printer according to the present invention;
- Fig. 3 - 4: are dedicated user interface windows of a user interface of a printer according to the present invention;
- Fig. 5: is a flow diagram of a method according to the present invention; and
- Fig. 6: is a schematic diagram of a computer readable medium according to the present invention.

### DETAILED DESCRIPTION OF THE PREFERRED EMBODIMENTS

The present invention will now be described with reference to the accompanying drawings, wherein the same reference numerals have been used to identify the same or similar elements throughout the several views.

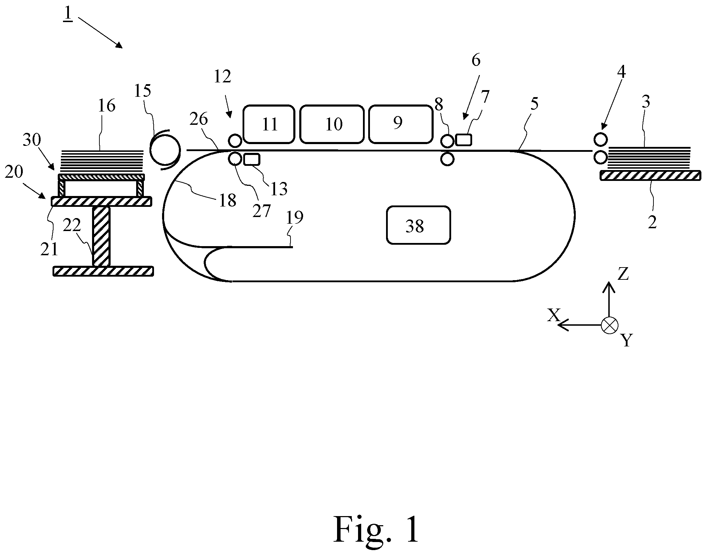

Fig. 1 illustrates a sheet printer 1. An input module 4 on the right side comprises one or more input stack supports 2 supporting at least one stack 3 of sheets. The stack supports may be pallets or print media trays. Individual sheets are separated from the stack 3 by the input module 4, which places the sheets on an input path of the printer 1. The input module 4 may comprise a separator to separate individual sheets from the stack 3. The input path brings the sheets to a print path section, illustrated as a straight, linear path, where the sheet is processed for printing thereon. The print path section comprises a switch 5 positioned at an intersection of the input path and a duplex path, which duplex path is arranged to return printed sheets to the print path. Sheets on the print path can thus be a mix of unprinted or one-side printed sheets.

The print path comprises a first registration unit 6 downstream of the switch 5. The first registration unit 6 comprises a first sheet detector 5 for detecting a position and orientation of each sheet. The orientation of the sheet is e.g. the angle of its forward facing or leading edge with respect to the transport direction X. Dependent on the measured position and orientation, the first registration unit 6 controls its registration drive 7 to position the sheet to a predefined position and/or align the sheet to a predefined orientation, for example with its leading edge perpendicular to the transport direction X, so that it will be parallel to the printhead assembly 10.

The registered sheet subsequently passes by a coater 9, which applies a liquid coating on at least a portion of the treated surface. The coater 9 may for example comprise an array of printheads configured to jet droplets of coating liquid or comprise a roller for transferring coating liquid as the roller rolls over the sheet. Any suitable coating liquid may be applied, such as for example Canon ColorGrip. The coating liquid preferably forms a continuous coat on the sheet, which enables or improves the bonding of color inks to the sheet.

The coated sheets travels to the printhead assembly 10, which jets one or more layers of color inks onto the coated sheet. The printhead assembly 10 is preferably a page wide array of inkjet printheads to allow productive printing.

The jetted color inks are then fixed onto the sheet by means of a fixation unit 11. The fixation unit 11 applies or removes energy from the sheet, so that the jetted color inks undergo a phase change. The fixation unit 11 may comprise coolers and/or heaters, such radiation heaters with e.g. UV or IR light, hot air blowers, such as impingement blowers, contact heaters, such a heated transport belt or drum, etc. Alternatively or additionally, the fixation unit 11 may comprise a curing station, which emits light with a wavelength which induces a chemical reaction in the color inks and/or coating liquid, causing these to solidify.

At the downstream side of the print path, a second registration unit 12 is provided to adjust the position and/or orientation of the sheets. This second registration unit 12 may be configured similar to the first registration unit 6. The second registration unit 12 can be applied to position and/or orientation a sheet with respect to a specific output location, for example a stacking location. The second registration unit 12 comprises its own registration drive 27 and may comprise a sheet detector 13, or the sheet's position can be derived by tracking the sheet's movement after detection by the first sheet detector 7.

At the end of the print path, a further switch 26 is provided to selectively direct sheets into the duplex path or to the output location. The duplex path preferably comprises a turn station, which inverts the sheet, so that it leaves the duplex path with its unprinted side eventually facing the printhead assembly 10. The output location in Fig. 1 comprises a stacker 20, which gathers the printed sheets in a further stack 16 on a pallet 30 on a pallet support 21. The stacker 20 comprises a stacking unit 15, which receives printed sheets and positions these on top of another into the stack 16. The stacking unit 15 may in one example comprise a rotatable flipping wheel with one or more slots at its circumference for holding a leading edge of a sheet. By rotating the flipping wheel as it holds the sheet, the sheet is flipped, and then released from the slots as the leading edge of the sheet contacts a stop at the bottom side of the flipping wheel. Such a stacking unit is known from US 9457980 B2, the content of which is herein incorporated by reference. The pallet support 21 of the stacker 20 is provided on a lift 22, so that its position in the vertical direction Z can be adjusted. This allows the top of the stack 16 to be at the working level of the stacking unit 15 as the stack height increases. The pallet support 21 is configured for supporting a pallet 30, though it absence of a pallet it may be suited for directly stacking sheets thereon as well.

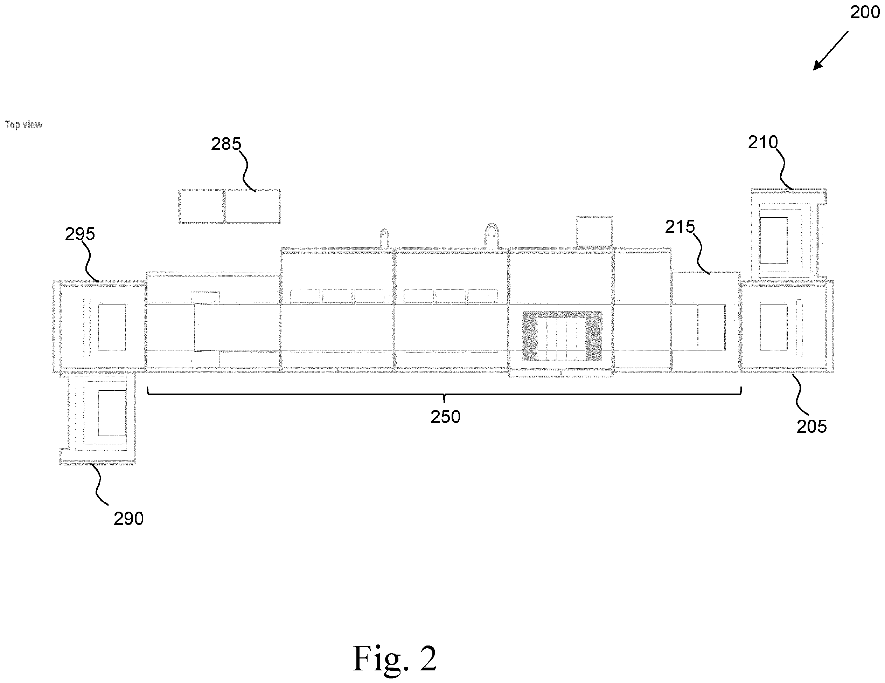

Fig. 2 shows a top view 200 of the printer according to the present invention. The printer is configured to output stacks of printed print media on pallets. The printer comprises a middle part 250 comprising the print heads, the coater, the dryer and the print path which leads from the right side of part 250 to the left side of part 250 in Fig. 2.

At the right side of Fig. 2 there are two locations 205, 210 for the pallets to be processed. The first location 205 may contain a first pallet with a stack of sheets which is scheduled to be processed immediately when the printer is ready. The second location 210 may contain a second pallet which may contain, is currently loaded or planned to be loaded with a stack of sheets which will be processed after the processing of the first pallet at the first location 205. A transport mechanism (not shown) is configured to move the second pallet from the second location to the first location, for example an installation for automatic pallet replacement.

At the right side of Fig. 2 there is also a location 215 for one or more print media trays for holding print media to be processed by the printer 1.

At the left side of Fig. 2 there are two locations 290, 295 for the pallets which are configured to gather processed sheets which are received from the left side of the middle part 250 of printer 1. A user interface 285 is positioned near the printer 1 and wired or wireless connected to the printer 1. In another embodiment the user interface is built in or attached to the printer 1.

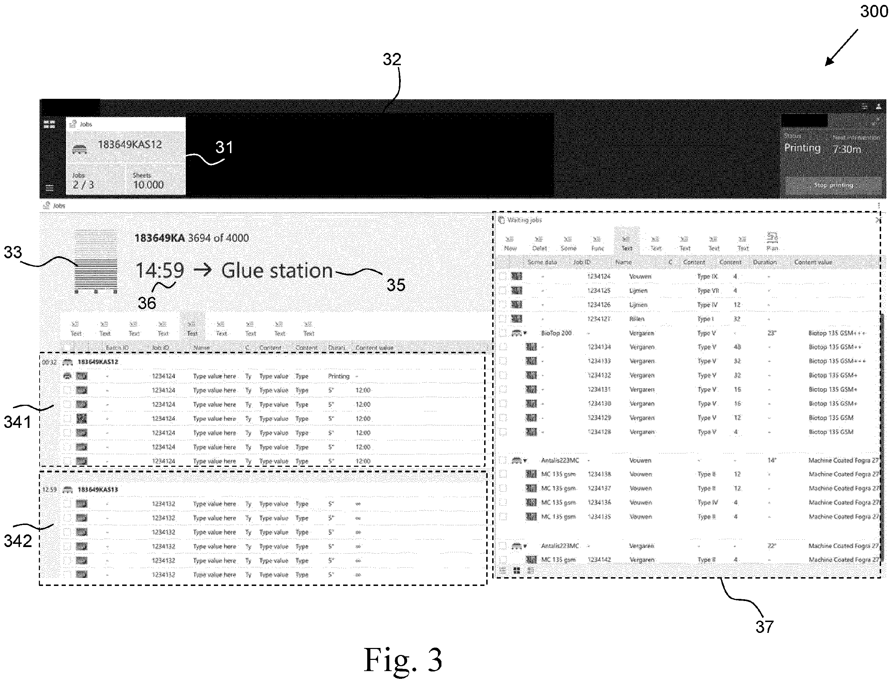

Fig. 3 shows a user interface window 300 according to a first embodiment of the present invention. The user interface window 300 is presented to the operator at the user interface 285 of the printer 1 shown in Fig. 2. In another embodiment the dedicated user interface windows are displayed on a remote and/or mobile device such as a pc, a laptop, a smart phone, a tablet computer, etc., which is digitally - wired or wireless - connected to the printer 1. With a dynamic user interface the user interface windows can be displayed anywhere, at the printer and a user workplace via a web user interface.

At the header 32 of the user interface window 300 a first visualization of a pallet stack object 31 is shown which is currently processed by the printer 1. At least one print job is attributed to the pallet stack object 31, e.g. three print jobs are attributed to the pallet stack object 31. The visualization of the pallet stack object 31 comprises a unique identification number, for example 183649KAS12, and an indication which print job of the attributed print jobs is currently being processed by the printer 1. In the case of pallet stack object 31 print job number 2 out of 3 is being processed. The visualization of the pallet stack object 31 also comprises a total number of sheets of the attributed print jobs, e.g. 10.000 sheets.

On a left side of a body of the user interface window 300 a second visualization 33 of the same pallet stack object is presented which shows the pallet, the sheets on the pallet and the print jobs which are already processed. In the visualization 33 the first print job has been completely processed which is indicated by a horizontal bar in the second visualization 33 and the processing of the second print job is started. In case of more than one print job in a pallet stack object, horizontal bars will appear between the print jobs in a visualization of the pallet stack object such as the second visualization 33. By doing so, the number of print jobs and the relative amounts of sheets per print job in a pallet stack object can easily be recognized by the user. The second visualization 33 is accompanied by a time indication 36 when the print jobs on the pallet are intended to be completely printed and a process indication 35 of the post-processing step that is intended to be applied to the printed sheets on the corresponding pallet. The time indication 36 may serve as a scheduled time for unloading the corresponding stacked output from the printer.

On the left side of the body of the user interface window 300 a third visualization 341 of the same pallet stack object is present which shows the images of the print jobs attributed to the pallet stack object. For each image information with respect to the image is presented in a number of columns such as an indicator if the image is currently being printed, a job Identification number, an image name, an image description of the content, an estimated processing time, a start time of the processing of the image, etc. A first list 341 shows the images to be processed which are part of the print jobs attributed to pallet stack object 31. A second list 342 shows images which are part of print jobs attribute to a next scheduled pallet stack object. The first list 341 and the second list 342 and even more lists if scheduled are part of a queue of pallet stack objects which are displayed on the left side of the body of the user interface window 300.

On the right side of the body of the user interface window 300 a visualization 37 of a waiting room for print jobs is shown. The print jobs in the waiting room 37 are not yet scheduled for processing. However, the operator or user of the printer 1 can already gather and group the print jobs on certain criterions. A first criterion may be a media type that is intended to be used by the print job. A second criterion may be a post-processing step which is intended to be applied to the printed sheets of the print job after printing the print jobs by the printer 1. This is advantageous, since a group of print jobs which is formed according to the first and/or the second criterion can be used to create a pallet stack object for.

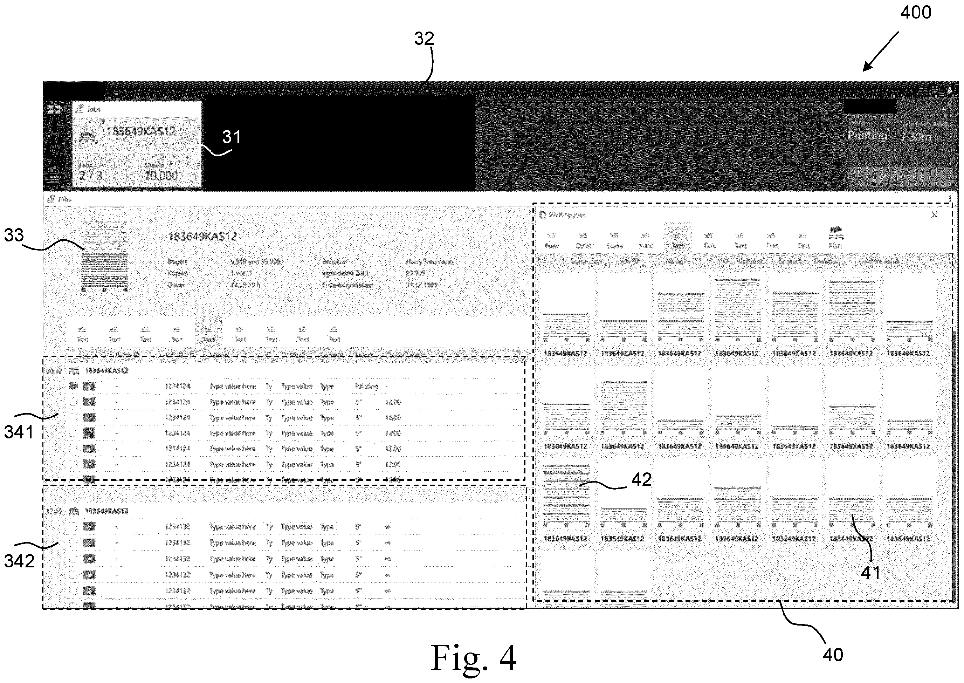

Fig. 4 shows a user interface window 400 according to a second embodiment of the present invention. The user interface window 400 is presented to the operator at the user interface 285 of the printer 1 shown in Fig. 2. In another embodiment the dedicated user interface windows are displayed on a remote and/or mobile device such as a pc, a laptop, a smart phone, a tablet computer, etc., which is digitally - wired or wireless - connected to the printer 1.

The user interface window 400 shows a same header 32, a same first visualization 31 of the pallet stack object and a same second visualization 341, 342 of queued pallet stack objects as in the user interface window 300 in Fig. 3. The difference between the user interface windows 300 and 400 is that in user interface window 400 a waiting room 40 on the right side of the body of the user interface window 400 is a collection of created pallet stack objects 41, 42 instead of a collection of print jobs as in the waiting room 37 in the user interface window 300 in Fig. 3. This is advantageous, since by creating in advance the pallet stack objects 41, 42 in the waiting room 40 a scheduling of the created pallet stack objects 41, 42 in the pallet stack queue on the left side of the body of the user interface window 400 is easy and fast.

According to another embodiment an empty pallet stack object for print jobs using a specific media type and/or having a specific post-processing step is created in the waiting room. The empty pallet stack object can be filled with print jobs which need the corresponding media type and/or corresponding post-processing step. In the case that the print job comprises a media type property and/or a post-processing step indicator, the filling of empty pallet stack objects may be automatically performed by the print controller. Namely, the print controller may retrieve the media type and/or post-processing step from a print job and assign the print job to the corresponding (empty) pallet stack object. In another embodiment the print controller filters the received print jobs on media type and/or post-processing step and creates a pallet stack object if a number of sheets of the filtered print jobs exceeds a predetermined number of sheets. The predetermined number of sheets may be equal to a less than a maximum number of sheets that a pallet can carry and can be processed by the printer. The maximum number of sheets may for example correspond to a stack height maximum which can be processed by the printer or to a stack height maximum which can be processed by a corresponding post-processing device. A stack height of a number of sheets can be calculated based on the amount of sheets and the thickness of each sheet of each print media in the stack. Moreover, in order to get an accurate output stack height, a difference between an input stack height and an output stack height may be determined by taking into account air captured between the printed sheets in the output stack and ink coverage of the printed sheets in the output stack. In other words, the air and the ink coverage are converted to an expansion in the output stack compared to the consumed input stack.

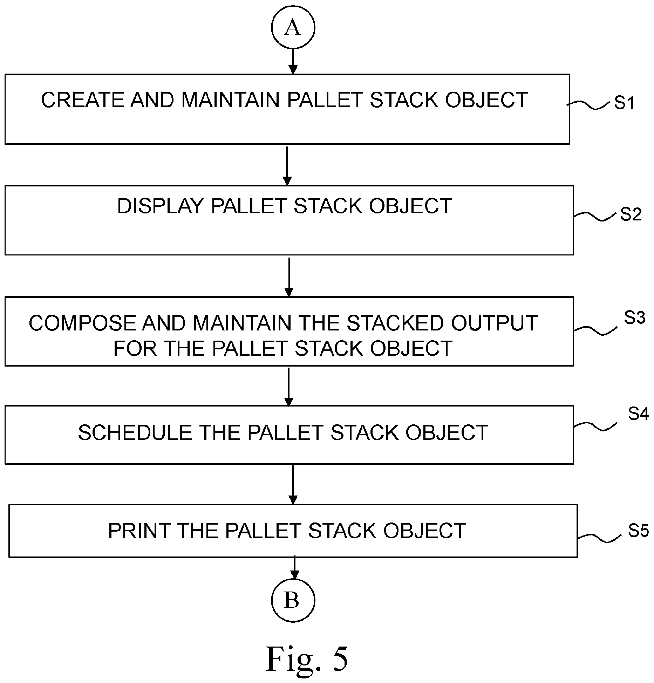

Fig. 5 is a flow diagram of the method according to the present invention. The method is suitable for a printer configured to output stacks of printed print media on pallets. The printer comprises a print controller comprising a print queue and/or a print job waiting room. The method starts in a starting point A which leads to a first step S1.

In the first step S1 the print controller is creating and maintaining a pallet stack object which represent a pallet with a stacked output. The stacked output may be printed sheets related to at least one print job from the print queue and/or the print job waiting room.

In a second step S2 the pallet stack object is displayed on dedicated user interface windows at a user interface connected to the printer. The user interface windows 300 and 400 as shown in Fig. 3 and Fig. 4 are examples of such dedicated user interface windows.

In a third step S3 the user is allowed by means of the user interface of the printer to compose and maintain the stacked output for each pallet stack object created by the print controller.

In a fourth step S4 the pallet stack object is scheduled in a pallet stack object queue for printing the corresponding at least one print job by the printer.

In a fifth step S5 the corresponding at least one print job of the pallet stack object is printed by the printer.

The method ends in an end point B.

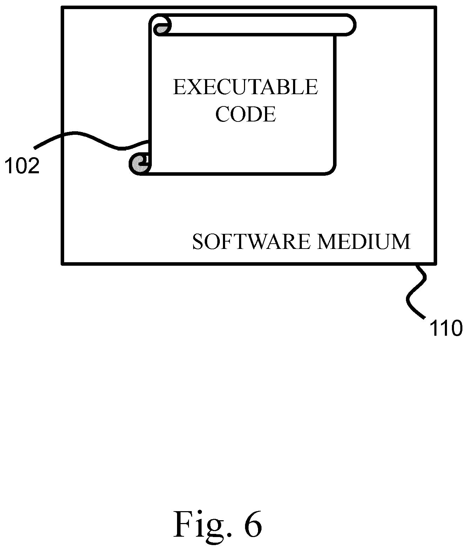

Fig. 6 schematically shows a non-transitory software medium 110 according to the invention. The software medium 110 comprises executable code 102 configured to, when executed, perform the method according to the invention, e.g. as described with respect to either the printer shown in Fig. 1 or the method shown in Fig. 5 and/or according to any of the variants and modifications of the printer and/or of the method described hereinbefore.

The non-transitory software medium 110 may, specifically, be formed as a CD or a CD-ROM, a DVD or a DVD-ROM, a Blu Ray disc or a Blu Ray-ROM disc, a magnetic hard drive, a solid state disk (SSD) hard drive, a USB memory device and so on.

Although specific embodiments of the invention are illustrated and described herein, it will be appreciated by those of ordinary skill in the art that a variety of alternate and/or equivalent implementations exist. It should be appreciated that the exemplary embodiment or exemplary embodiments are examples only and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

The present invention being thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A printer configured to output stacks of printed print media on pallets, the printer comprising a print controller comprising a print job queue and/or a print job waiting room comprising print jobs, **characterized in that** the print controller is configured to create and maintain a pallet stack object which represent a pallet with a stacked output, the stacked output being printed sheets related to at least one print job from the print job queue and/or a print job waiting room, to display the pallet stack object on dedicated user interface windows at a user interface connected to the printer and to allow a user by means of the user interface of the printer to compose and maintain the stacked output for each pallet stack object created by the print controller.

2. A printer according to claim 1, wherein the print controller is configured to maintain a queue of pallet stack objects in a chronological sequence order of processing the corresponding stacked output of the pallet stack objects in the queue of pallet stack objects.

3. A printer according to claim 1 or 2, wherein the print controller is configured to optimize a composition of the pallet of the stacked output with respect to a post-processing step and/or a media property defined in the at least one print job corresponding to the stacked output.

4. A printer according to any one of the preceding claims, wherein the print controller is configured to optimize a composition of the pallet of the stacked output with respect to characteristics or dimensions of an output stack to be created.

5. A printer according to any one of the preceding claims, wherein one of the dedicated user interface windows comprises a visualization of the queue of pallet stack objects.

6. A printer according to any one of the preceding claims, wherein the print controller is configured to schedule for each pallet stack object a scheduled time for unloading the corresponding stacked output from the printer.

7. A printer according to any of the preceding claims, wherein one of the dedicated user interface windows comprises a visualization of a print path of the printer, the visualization comprising a real-time indication of a location of sheets in the print path which are intended to be part of a stacked output of a pallet stack object which is currently being processed by the printer.

8. A method for a printer configured to output stacks of printed print media on pallets, the printer comprising a print controller comprising a print queue and/or a print job waiting room,
**characterized in that** the method comprises the steps of
- creating and maintaining a pallet stack object which represent a pallet with a stacked output, the stacked output being printed sheets related to at least one print job from the print queue and/or the print job waiting room,
- displaying the pallet stack object on dedicated user interface windows at a user interface connected to the printer,
- allowing a user by means of the user interface of the printer to compose and maintain the stacked output for each pallet stack object created by the print controller,
- scheduling the pallet stack object in a pallet stack object queue for printing the corresponding at least one print job by the printer, and
- printing the corresponding at least one print job of the pallet stack object.

9. A computer program product, including computer readable code embodied on a computer readable medium, said computer readable code comprising instructions for executing the steps of a method according to claim 8 by means of a printer according to any one of the claims 1 - 7.
